(19) **Europäisches Patentamt**

**European Patent Office**

**Office européen des brevets**

(11) Veröffentlichungsnummer : **0 391 213 B1**

(12) ## EUROPÄISCHE PATENTSCHRIFT

(45) Veröffentlichungstag der Patentschrift :
**25.11.92 Patentblatt 92/48**

(21) Anmeldenummer : **90105806.5**

(22) Anmeldetag : **27.03.90**

(51) Int. Cl.⁵ : **B65G 47/14,** B65G 47/19,
B65G 65/42

(54) **Vorratsbunker, insbesondere für Schwingzuführgeräte.**

(30) Priorität : **03.04.89 DE 3910694**

(43) Veröffentlichungstag der Anmeldung :
**10.10.90 Patentblatt 90/41**

(45) Bekanntmachung des Hinweises auf die
Patenterteilung :
**25.11.92 Patentblatt 92/48**

(84) Benannte Vertragsstaaten :
**AT BE CH ES FR GB IT LI NL SE**

(56) Entgegenhaltungen :
**DE-A- 3 327 426**
**DE-A- 3 715 381**

(56) Entgegenhaltungen :
**DE-C- 386 207**
**DE-C- 2 806 331**
**DE-U- 1 937 346**
**US-A- 3 143 201**
**US-A- 4 578 001**

(73) Patentinhaber : **Fischer, Anton**
**Richard-Wagner-Strasse 9**
**W-7209 Aldingen (DE)**

(72) Erfinder : **Fischer, Anton**
**Richard-Wagner-Strasse 9**
**W-7209 Aldingen (DE)**

(74) Vertreter : **Neymeyer, Franz, Dipl.-Ing. (FH)**
**Haselweg 20**
**W-7730 Villingen 24 (DE)**

EP 0 391 213 B1

**Beschreibung**

Die Erfindung betrifft einen Vorratsbunker für Schwingzuführgeräte, die zum Sortieren und/oder Zuführen von Werkstücken dienen und einen Schwingtopf mit Schwingantrieb aufweisen, wobei der Vorratsbunker einen mit einer zentralen Auslaßöffnung versehenen, trichterartigen Behälterboden und unterhalb der Auslaßöffnung eine durch einen Bedarfsmelder aktivierbare Zuführeinrichtung aufweist, mittels welcher Werkstücke portioniert in den darunter angeordneten Schwingtopf befördert werden.

Bei einem solchen bekannten Schwingzuführgerät (DE-B- 28 06 331) weist der Vorratsbunker eine drehbar abgestützte, kegelförmige Bodenplatte auf, die mit einem Trichter des Vorratsbunkers eine ringförmige Ausgabeöffnung begrenzt. Dabei ist die als Vereinzelungsscheibe dienende Bodenplatte mit einer Spiralbahn versehen. An dem Trichter ist ein Ringvorhang befestigt, der mit einem nachgiebigen Rand die Bodenplatte umschließt, welche mittels eines Antriebes bedarfsweise antreibbar ist.

Bei einem anderen bekannten, ähnlichen vorbekannten Vorratsbunker der gattungsgemäßen Art (DE-B- 32 39 300) ist eine Bunkeraustragsvorrichtung vorgesehen, bei der eine Kreisscheibe und die Bodenplatte aus hochfestem Material mit hochglatter Oberfläche bestehen und bei der die der Bodenplatte benachbarte Kreisscheibe mit einem Umfangsabschnitt bis zum Rand der Bodenplatte reicht.

Bei diesen bekannten Vorratsbunkern ist zwar auch der Vorteil gegeben, daß sie jederzeit von oben nachgefüllt werden können, es müssen aber die Vereinzelungsscheiben bzw. Bodenplattten mit einem im Zentrum des Schwingtopfes angeordneten, den Boden des Schwingtopfes durchragenden motorischen Antrieb versehen sein, so daß der Schwingtopf nur noch als kreisringförmige Rinne bestehen bleibt und seine Aufnahmekapazität erheblich eingeschränkt ist. Zudem besteht bei diesen bekannten Vorrichtungen erfahrungsgemäß die Gefahr, daß die mehr oder weniger unkontrolliert auf dem ganzen Umfang des Ringvorhanges in den Schwingtopf austretenden Werkstücke, die je nach ihrer äußeren Form zu mehreren miteinander verkettet oder verhakt sein können, sich gegenseitig in der relativ schmalen, kreisringförmigen Rinne des Schwingtopfes verklemmen und somit Funktionsstörungen verursachen können.

Aus der AU-B- 198 675 ist ein Vorratsbunker für Schüttgut bekannt, bei dem unterhalb der Auslaßöffnung ein endloses Förderband horizontal angeordnet ist, dessen Antrieb geregelt wird. Aus dem DE-U- 1 937 346 ist ein Vorratsbunker für Schüttgut bekannt, bei dem unterhalb der Auslaßöffnung ein endloses Förderband horizontal angeordnet ist, wobei der über dem auslaufseitigen Ende des Förderbandes liegende Randabschnitt der Auslaßöffnung eine elastisch auslenkbare Schließzunge aufweist.

Der Erfindung liegt die Aufgabe zugrunde, einen Vorratsbunker zu schaffen, bei dem das Zuführen der Werkstücke in den Schwingtopf auch bei unterschiedlicher Größe und unterschiedlicher Form sowie auch bei der Neigung der Werkstücke, sich zu Ketten aneinander zu verhaken, bezüglich der jeweils zugeführten Stückzahl mit erhöhter Exaktheit durchführen läßt und bei der die Form des Schwingtopfes von der Zuführeinrichtung unabhängig ist.

Gelöst wird diese Aufgabe erfindungsgemäß dadurch, daß dicht unterhalb der Auslaßöffnung als Zuführorgan ein sich über deren gesamte Weite erstreckendes, in Horizontallage über zwei Walzen geführtes, endloses Förderband angeordnet ist, dessen Antrieb vom Bedarfsmelder gesteuert wird, und daß der über dem auslaufseitigen Ende des Förderbandes liegende Randabschnitt der Auslaßöffnung einen Ausschnitt mit einer in Zuführrichtung elastisch auslenkbaren Schließzunge aufweist.

Außer den sich schon aus der Aufgabe ergebenden Vorteilen hat die erfindungsgemäße Lösung insbesondere noch den Vorzug, daß praktisch beliebige Schwingtöpfe, die eine geschlossene Bodenfläche aufweisen, auswechselbar verwendet werden können, während bei den bekannten Vorrichtung die Schwingtöpfe zentrale Bodenöffnungen aufweisen müssen, durch welche der Antrieb der rotierenden Zuführeinrichtung hindurchragt. Durch die größere bzw. über den ganzen Durchmesser zur Verfügung stehende Bodenfläche ist die Gefahr, daß sich Werkstücke im Schwingtopf verklemmen, vollständig beseitigt. Zudem ist sichergestellt, daß die Werkstücke immer an der selben Stelle in den Schwingtopf fallen. In bezug auf die Anordnung des Bedarfsmelders ist auch dies insofern von Vorteil, als die Möglichkeit besteht, den Bedarfsmelder in einem bestimmten Abstand von der gegebenen Einlaufstelle der Werkstücke anzuordnen, der maximal nahezu einem ganzen Umlauf entspricht. Die Werkstücke haben somit, wenn sie beim Bedarfsmelder ankommen, schon eine weitgehende Entkettung und Verteilung erfahren.

Durch die Ausbildung nach Anspruch 2 ist eine Einstellung der Durchlaßöffnung auf die Größe der Werkstücke möglich.

Durch die Anordnung der einen Förderband-Walze in bezug auf die Schließzunge gemäß Anspruch 3 kann eine gute Vereinzelungswirkung der möglicherweise ineinander verhakten Werkstücke erzielt werden.

Die Ausgestaltung der Erfindung nach Anspruch 4 ergibt sich nicht nur eine sinnvolle Anpassung des Öffnungsquerschnittes an die Förderfläche des Förderbandes, sondern es wird auch sichergestellt, daß die jeweils untersten, unmittelbar auf dem Förderband aufliegenden Werkstücke durch die Schachtwirkung des Kragens nur noch in vermindertem Maße solchen Nachschubkräften ausgesetzt sind, die der Zufuhrförderrichtung entgegenwirken. Auch hierdurch ist eine Verbesserung der Zufuhrkontrolle bzw. Werkstückvereinzelung erreicht. Dem gleichen Zweck dienen auch die Ausgestaltungen der Erfindung nach den Ansprüchen 5 und 6, wobei die Ausgestaltung des Anspruches 6 noch die vorteilhafte Möglichkeit bietet, die Durchlaßöffnung zwischen dem Stellschieber bzw. der Schließzunge und dem Förderband auf die Größe bzw. Form der zuzuführenden Werkstücke einzustellen.

Durch die Ausgestaltung der Erfindung nach Anspruch 6 ist auch das Förderband auf die Größe bzw. Form der jeweils aus dem Vorratsbunker in den Schwingtopf zuzuführenden Werkstücke zum Zwecke einer optimalen und werkstückschonenden Mitnahme einstellbar, wobei alternativ dazu auch die Möglichkeit gegeben wäre, mehre mit unterschiedlichen Mitnehmern versehene Förderbänder austauschbar zur Verfügung zu haben.

Anhand der Zeichnung wird im folgenden ein Ausführungsbeispiel der Erfindung näher erläutert. Es zeigt:

Fig. 1 im Schnitt einen Vorratsbunker mit einem Schwingzuführgerät;

Fig. 2 eine Draufsicht der Fig. 1.

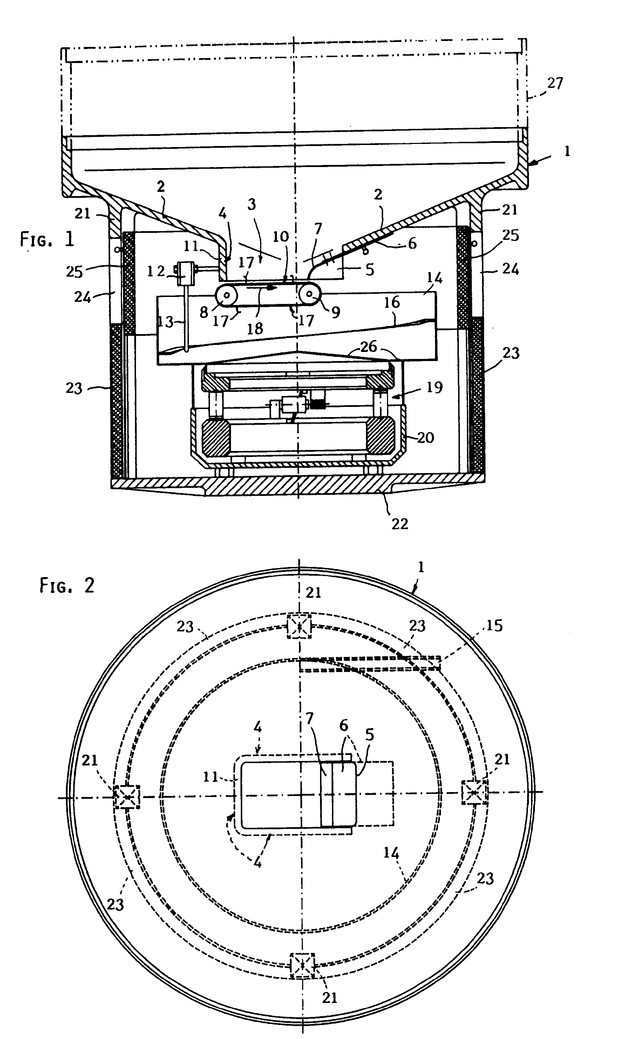

Der in der Zeichnung dargestellte Vorratsbunker besteht aus einem topfförmigen Behälter 1 mit einem trichterartigen Behälterboden 2, der etwa in seinem Zentrum eine rechteckförmige Auslaßöffnung 3 aufweist. Diese Auslaßöffnung 3 ist mit einem nach unten gerichteten dreiseitigen Kragen 4 versehen, und sie weist an einer Schmalseite eine Ausnehmung 5 auf, in welche eine an einem einstellbaren Schieber 6 befestigte, in Ausgaberichtung elastische Schließzunge 7 hineinragt. Dicht unterhalb der Auslaßöffnung 3 ist ein in Horizontallage über zwei Walzen 8 und 9 geführtes, endloses Förderband angeordnet, das sich über die ganz Weite der Auslaßöffnung 3 erstreckt und insbesondere von der einen schmalseitigen Kragenwand 11 bis zu der gegenüberliegenden Schließzunge 7 reicht und somit die Auslaßöffnung verschließt. Eine der Walzen 8 und 9 wird, bezogen auf die Darstellung der Fig. 1, in Uhrzeigerdrehrichtung motorisch angetrieben. Es ist aus Fig. 1 ersichtlich, daß bei der dort dargestellten, bevorzugten Ausführungsform die Achse der Walze 8 direkt unter der Kragenwand 11, also der Schließzunge 7 gegenüberliegend und die Achse der Walze 9 direkt unter dem nach unten gewölbten Endabschnitt der Schließzunge angeordnet ist. An der Kragenwand 11 ist auch ein elektrischer Bedarfsmelder 12 angeordnet, dessen Fühlerstab 13 vertikal nach unten gerichtet ist und in einen Schwingtopf 14 ragt. Die aus den beiden Walzen 8 und 9, dem Förderband 10 und der elastisch auslenkbaren und auf unterschiedliche Durchlaßweiten einstellbaren Schließzunge 7 bestehende Zuführvorrichtung dient dazu, aus dem Behälter 1 des Vorratsbunkers portioniert bedarfsweise Werkstücke so in den Schwingtopf 14 zu befördern, daß in diesem ein in bestimmten Grenzen gleichbleibender Füllstand besteht.

Das Förderband 10 ist auf seiner Außenseite mit auswechselbaren Mitnehmern 17 versehen, durch welche die auf seinem oberen Trum aufliegenden Werkstücke, wenn es in Pfeilrichtung 18 angetrieben wird, mitgenommen und unter Auslenkung der Schließzunge 7 aus der Auslaßöffnung 3 herausbefördert werden. Dabei sorgt die mittels des Schiebers 6 auf unterschiedliche Durchlaßweiten einstellbare Schließzunge 7 dafür, daß die vom Förderband 10 erfaßten Werkstücke in dosierten Mengen oder jeweils einzeln und nicht haufenweise aus dem dreiseitigen Kragen 4 und die Schließzunge 7 gebildeten schachtartigen Raum des Behälters 1 und durch die Ausnehmung 5 nach außen gelangen, um frei in den Schwingtopf 14 zu fallen. Die an der Stelle der fehlenden vierten Seite des Kragens 4 der Auslauföffnung 3 angeordnete Schließzunge 7 ragt beim gezeigten Ausführungsbeispiel etwa um ein Drittel in die Öffnungslänge hinein. Die Steuerung des Förderbandantriebs erfolgt in bekannter Weise mittels eines vom Bedarfsmelder 12 beeinflußten Zeitschalters, der den Förderbandantrieb für eine bestimmte, kurze Dauer einschaltet, wenn der Bedarfsmelder nicht innerhalb eines bestimmten Zeitabstandes durch ein seinen Fühlerstab 13 auslenkendes Werkstück betätigt wird. Mit Hilfe des Schwingtopfes 14 werden die eingegebenen Werkstücke über eine Förderbahn 16 in einen Ausgabekanal 15 transportiert und dabei lagemäßig sortiert.

Durch die Austauschbarkeit der Mitnehmer 17 des Förderbandes 10 ist auch die Möglichkeit gegeben, die jeweils schonenste und zugleich aber auch sicherste Mitnahme zu erreichen.

Der Schwingtopf 14 sitzt in bekannter Weise auf einem elektromagnetischen Schwingantrieb 19, der seinerseits in einem topfartigen Sockelgehäuse 20 untergebracht ist.

Der Behälter 1 ist mittels eines aus vier Standbeinen 21 bestehenden Gestell auf einer Sockelplatte 22 befestigt. Dabei sind die Standbeine jeweils um 90° zueinander versetzt auf einer Kreisbahn angeordnet, deren Durchmesser so groß ist, daß das aus dem Schwingtopf 14 und dem Schwingantrieb 19 mit dem Sockelgehäuse 20 bestehende Schwingzuführgerät dazwischen Platz hat und ebenfalls auf der Sockelplatte 22 in Zentrallage angeordnet werden kann. Zwischen den Standbeinen 21 sind jeweils schallisolierende Wandelemente 23 angeordnet, die zusammen eine zylindrische Ringwand ergeben, welche das Schwingzuführgerät vollständig umschließen, um einen wirksamen Lärmschutz zu bilden. Beim gezeigten Ausführungsbeispiel sind zwei sich diametral gegenüberliegende Wandelemte 23 in ihrer oberen Hälfte jeweils mit fensterartigen Öffnungen 24 versehen, welche durch heb- und senkbare, ebenfalls schallisolierende Türen 25, die als Innenschalen ausgebildet sind, verschlossen werden können.

Auf diese Weise wird eine sehr wirksame Schalldämmung erzielt.

Es ist erkennbar, daß in dem von den Standfüßen 21 und den Wandelementen 23 bzw. 25 umschlossenen Hohlraum unterhalb der Auslaßöffnung 3 des Behälters 1 Schwingzufuhrgeräte mit beliebig geformten Schwingköpfen eingebaut werden können, daß vor allem auch solche Schwingtöpfe verwendet werden können, die einen geschlossenen Boden 26 und somit eine größtmögliche Verteilerfläche aufweisen.

Durch strichpunktierte Linien ist in Fig. 1 angedeutet, wie das Fassungsvermögen des Behälters 1 durch einen ringförmigen Aufsatz 27 vergrößert werden kann. Selbstverständlich ist es auch möglich, den Behälter 1 bzw. den Aufsatz 27 mit einem Deckel zu versehen um eine ringsum geschlossene Abschirmung zu erzielen.

## Patentansprüche

1. Vorratsbunker für Schwingzuführgeräte, die zum Sortieren und/oder Zuführen von Werkstücken dienen und einen Schwingtopf mit Schwingantrieb aufweisen, wobei der Vorratsbunker (1) einen mit einer zentralen Auslaßöffnung (3) versehenen, trichterartigen Behälterboden (2) und unterhalb der Auslaßöffnung (3) eine durch einen Bedarfsmelder (12,13) aktivierbare Zuführeinrichtung (10) aufweist, mittels welcher Werkstücke portioniert in den darunter angeordneten Schwingtopf (14) befördert werden, **dadurch gekennzeichnet,** daß dicht unterhalb der Außlaßöffnung (3) als Zuführeinrichtung ein sich über deren gesamte Weite erstreckendes, in Horizontallage über zwei Walzen (8, 9) geführtes, endloses Förderband (10) angeordnet ist, dessen Antrieb von einem Bedarfsmelder (12) gesteuert wird, und daß der über dem auslaufseitigen Ende des Förderbands (10) liegende Randabschnitt der Außlaßöffnung (3) einen Ausschnitt (5) mit einer in Zuführrichtung elastisch auslenkbaren Schließzunge (7) aufweist.

2. Vorratsbunker nach Anspruch 1, dadurch gekennzeichnet, daß die Schließzunge (7) an einem einstellbaren Schieber (6) zur Einstellung auf unterschiedliche Durchlaßweiten befestigt ist.

3. Vorratsbunker nach Anspruch 1, dadurch gekennzeichnet, daß sich die auslaufseitige Walze (9) unter der Schließzunge (7) befindet.

4. Vorratsbunker nach Anspruch 1, dadurch gekennzeichnet, daß die Auslaßöffnung (5) eine rechteckige Form mit einem dreiseitigen nach unten gerichteten Kragen (4) aufweist.

5. Vorratsbunker nach Anspruch 4, dadurch gekennzeichnet, daß die Schließzunge (7) an der Stelle der fehlenden vierten Seite des Kragens (4) der Auslaßöffnung (3) angeordnet ist und um etwa ein Drittel in die Öffnungslänge hineinragt.

6. Vorratsbunker nach Anspruch 1, dadurch gekennzeichnet, daß das Förderband (10) mit austauschbaren Mitnehmern (17) versehen bzw. bestückbar ist.

## Claims

1. Storage bin for vibratory feeders which are used for sorting and/or feeding workpieces and have a vibratory container with vibratory drive, the storage bin (1) having a funnel-like container bottom (2) provided with a central outlet opening (3), and under the outlet opening (3) a feeding device (10) which can be activated by a requirement indicator (12, 13), by means of which feeding device workpieces are conveyed in batches into the vibratory container (14) mounted thereunder, characterized in that, closely below the outlet opening (3), an endless conveyor belt (10) is mounted, extending over the entire width of the outlet opening and driven in horizontal position over two rollers (8, 9), the belt drive being controlled by a requirement indicator, and in that the edge portion of the outlet opening (3) situated above the end of the delivery side of the conveyor belt (10) has a cutout (5) with a locking tongue (7) elastically deflectable in the direction of feed.

2. Storage bin according to claim 1, characterized in that the locking tongue (7) is secured on an adjustable bolt (6) for setting to various outlet widths.

3. Storage bin according to claim 1, characterized in that the roller (9) on the outlet side is situated under the locking tongue (7).

4. Storage bin according to claim 1, characterized in that the outlet opening (3) has a rectangular shape with a three-sided downwardly directed collar (4).

5. Storage bin according to claim 4, characterized in that the locking tongue (7) is mounted at the place of the missing fourth side of the collar (4) of the outlet opening (3) and protrudes by about a third into the length of the opening.

**6.** Storage bin according to claim 1, characterized in that the conveyor belt (10) is provided or can be fitted with exchangeable dogs (17).

## Revendications

**1.** Réservoir de stockage pour des appareils d'alimentation oscillants destinés au triage et/ou à l'amenée de pièces à usiner et présentant un pot oscillant avec système de mise en oscillations, le réservoir de stockage (1) comportant un fond (2) en forme d'entonnoir muni d'une ouverture de sortie (3) centrale et, au-dessous de l'ouverture de sortie (3), un dispositif d'alimentation (10) pouvant être activé par un indicateur de besoins (12, 13), à l'aide duquel des pièces à usiner sont transportées de manière portionnée dans le pot oscillant (14) placé au-dessous dudit disposiiif, **caractérisé en ce** que juste au-dessous de l'ouverture de sortie (3), est disposée comme organe d'amenée une bande transporteuse (10) sans fin s'étendant sur toute la largeur de ladite ouverture et guidée en position horizontale sur deux rouleaux (8, 9), dont l'entraînement est commandé par un indicateur de besoins (12), et que la section du bord de l'ouverture de sortie (3) située au-dessus de l'extrémité côté sortie de la bande transporteuse (10) présente une découpe (5) avec une languette de fermeture (7) qui peut être déviée élastiquement dans la direction d'amenée.

**2.** Réservoir de stockage selon la revendication 1, caractérisé en ce que la languette de fermeture (7) est fixée sur un coulisseau (6) réglable pour le réglage de différentes ouvertures de passage.

**3.** Réservoir de stockage selon la revendicaiion 1, caractérisé en ce que le rouleau (9) disposé du côté sortie se situe au-dessous de la languette de fermeture (7).

**4.** Réservoir de stockage selon la revendication 1, caractérisé en ce que l'ouverture de sortie (5) présente une forme rectangulaire avec un col (4) sur trois côtés dirigé vers le bas.

**5.** Réservoir de stockage selon la revendication 4, caractérisé en ce que la languette de fermeture (7) est disposée à l'endroit du côté manquant du col (4) de l'ouverture de sortie (3) et dépasse d'environ un tiers dans la longueur de l'ouverture.

**6.** Réservoir de stockage selon la revendicaiion 1, caractérisé en ce que la bande transporteuse (10) est ou peut être munie ou équipée de tocs d'entraînement (17) interchangeables.

Fig. 1

Fig. 2